Europäisches Patentamt

(19) European Patent Office

Office européen des brevets

(11) Numéro de publication: **0 063 065**
**A1**

(12) ## DEMANDE DE BREVET EUROPEEN

(21) Numéro de dépôt: **82400534.2**

(22) Date de dépôt: **24.03.82**

(51) Int. Cl.³: **G 01 C 15/00**

(30) Priorité: **25.03.81 FR 8106484**

(43) Date de publication de la demande:
**20.10.82 Bulletin 82/42**

(84) Etats contractants désignés:
**AT BE CH DE GB IT LI LU NL SE**

(71) Demandeur: **De Scorraille, Louis
Blanquefort
F-32270 Aubiet(FR)**

(72) Inventeur: **De Scorraille, Louis
Blanquefort
F-32270 Aubiet(FR)**

(74) Mandataire: **Morelle, Guy Georges Alain
Cabinet SCOPI 1, Avenue de Rangueil
F-31400 Toulouse(FR)**

(54) **Appareil pour arpenter et jalonner un terrain.**

㊼ Cet appareil référencé 1 est constitué :
- d'une part, d'un organe de mesure formé de quatre bras 2, 3, 4, 5 régulièrement disposés en étoile autour d'un moyeu central rotatif 6a-6b (flèche R), et dont les extrémités libres, portant soit un pommeau 12 ou une pointe 13 destinés à prendre appui sur le sol, définissent entre elles des unités égales d'une mesure de référence liée à la longueur L des bras
- et d'autre part, d'un organe de préhension manuelle 11 servant de coussinet à l'arbre de rotation 9 du susdit moyeu central.

EP 0 063 065 A1

APPAREIL DE MESURE D'UNE DISTANCE ENTRE DEUX POINTS,
DESTINE PLUS PARTICULIEREMENT A JALONNER UN TERRAIN

TITRE MODIFIÉ
voir page de garde

L'invention a trait au domaine agricole et concerne plus particulièrement un appareil de mesure d'une distance entre deux points, permettant notamment de placer des jalons sur un terrain.

Généralement ces jalons, disposés sur des lignes parallèles à égale distance les uns des autres, sont destinés à guider les déplacements d'engins agricoles qui répartissent, sur de larges bandes de terrain, des engrais, des produits de traitement ou autres, et ce, au moyen de pulvérisateurs ou de rampes de distribution. Pour éviter que les bandes traitées ne se chevauchent ou ne soient trop distantes l'une de l'autre, il est primordial que les jalons en regard sur des lignes parallèles soient parfaitement alignés. Cet alignement est obtenu en respectant scrupuleusement l'écart entre les jalons disposés sur une même ligne.

Or, les moyens utilisés actuellement pour mesurer cet écart sont rudimentaires et imprécis. En effet, l'homme de la terre procède encore à un comptage d'enjambées successives dont la distance est estimée approximativement ou à l'aide d'une chaîne d'arpentage qui nécessite la présence de deux personnes sur le terrain.

En vue d'améliorer grandement ces moyens de mesure archaïques, le demandeur a donc mené des recherches qui ont abouti à la conception d'un appareil remarquable par le fait qu'il est constitué :

- d'une part, d'un organe de mesure formé de n bras régulièrement disposés en étoile autour d'un moyeu central rotatif, et dont les extrémités libres, portant de manière amovible des pommeaux ou des pointes destinés à prendre appui sur le sol, définissent entre elles des unités égales d'une mesure de référence,

- et d'autre part, d'un organe de préhension manuelle servant de support au susdit moyeu rotatif.

Cet appareil, tenu dans la main de son utilisateur au moyen du susdit organe de préhension manuelle et à une hauteur suffisante pour que les extrémités libres des bras du susdit organe de mesure prennent appui sur le sol, fonctionne de la manière suivante.

L'homme de la terre marche le long de la ligne à jalonner en maintenant l'appareil à cette hauteur. Ce dernier, sous l'effet du mouvement d'avancement de son organe de préhension, impose une rotation à son organe de mesure. Les extrémités libres des bras subissent la même rotation, décrite dans un plan vertical et éventuellement entraînée dans son mouvement sous l'effet d'une force supplémentaire appliquée sur lesdits bras par l'autre main de l'utilisateur de l'appareil. Ainsi ces extrémités libres se succèdent les unes après les autres le long de la ligne à jalonner et à un espacement égal à la distance les séparant. Cette distance, appelée mesure de référence dans le contexte de la présente invention, correspond à la base d'un triangle isocèle dont les deux côtés égaux sont formés par deux bras adjacents.

Cette mesure de référence M est donc liée directement à la longueur L et au nombre n de bras par la relation trigonométrique suivante :

$$M = L \sqrt{2 \left(1 - \cos \frac{2\pi}{n}\right)}$$

Il suffit alors de choisir la longueur L et le nombre n des bras de manière à obtenir une valeur M qui soit un sous-multiple de la largeur des bandes de terrain à traiter.

Par exemple, en prenant M = 1,5 m, distance qui permet de placer des jalons à des intervalles de 6m, 9m et 12m très courants dans ce domaine, et n = 4, nombre qui facilite les manipulations de l'appareil, ce dernier sera construit en déterminant la longueur L desdits bras par la relation suivante :

$$L = \frac{M}{\sqrt{2 \left(1 - \cos \dfrac{2\pi}{n}\right)}} = \frac{1,5}{\sqrt{2 \left(1 - \cos \dfrac{\pi}{2}\right)}} = 1,06082m \simeq 1,06m.$$

Selon une caractéristique particulièrement avantageuse de l'invention, les bras de l'organe de mesure sont réglables en longueur au moyen de segments de bras coulissants ou emboîtables l'un dans l'autre et bloqués l'un par rapport à l'autre.

Cette caractéristique permet notamment de composer plusieurs mesures de référence avec le même appareil.

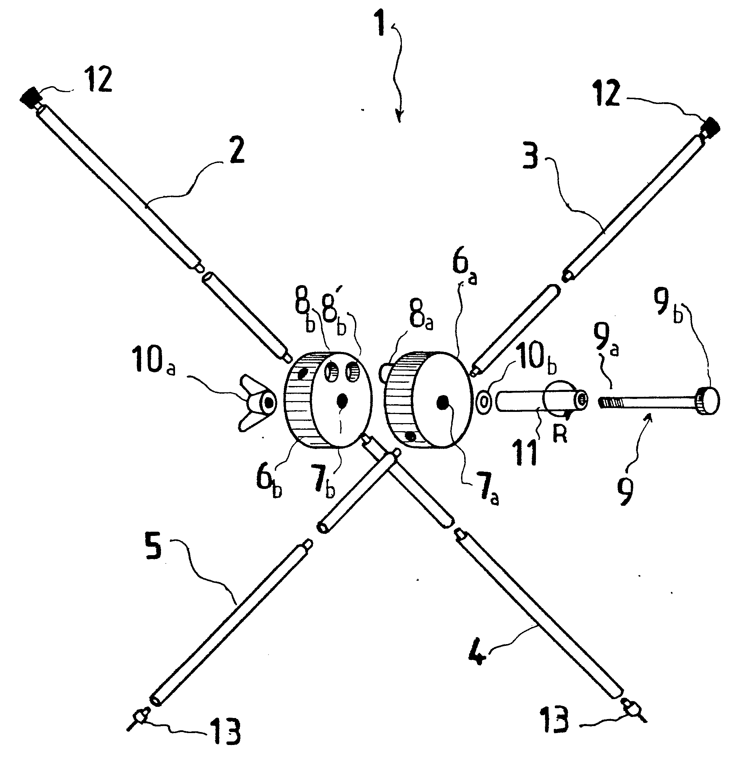

Bien que les aspects de l'invention considérés comme nouveaux soient évoqués dans les revendications annexées, de plus amples détails concernant des méthodes préférées et d'autres caractéristiques de celle-ci seront mieux compris en se référant à la description détaillée ci-dessous et au dessin l'accompagnant.

La figure portée par ce dessin est une vue en perspective partiellement éclatée d'un appareil de mesure conforme à l'invention.

Cet appareil référencé 1 comporte quatre bras 2, 3, 4, 5 associés deux à deux et dans le prolongement l'un de l'autre, à deux demi-moyeux formés par

0063065

deux platines circulaires 6a et 6b, percées chacune d'un orifice axial 7a et 7b et munies l'une d'un tenon 8a et l'autre de deux mortaises 8b et 8'b.

Les ajutages 7a et 7b sont traversés par l'extrémité filetée 9a d'un boulon 9 et permettent au moyen d'un écrou à ailettes 10a et d'un contre-écrou 10b de serrer l'une contre l'autre les deux platines 6a et 6b. La tête 9b du boulon 9 retient à l'aide du contre-écrou 10b un manchon tubulaire 11 dont la paroi externe est utilisée comme organe de préhension manuelle de l'appareil, et la paroi interne sert de coussinet à la tige du boulon 9. Ainsi, les deux demi-moyeux 6a et 6b et leurs bras 2, 3, 4, 5 sont montés en libre rotation (flèche R) dans un plan vertical et autour de l'axe du manchon 11.

Le tenon 8a et les deux mortaises 8b et 8'b permettent, lors de l'assemblage du premier dans l'une des deux secondes, de caler les deux platines 6a et 6b soit dans une position dite de travail illustrée sur le dessin et où les quatre bras sont disposés en étoile, soit dans une position dite de rangement où les quatre bras sont disposés selon deux axes parallèles.

Comme on l'a précisé au début du présent mémoire, l'extrémité des bras est munie d'un embout amovible portant soit un pommeau 12 pour les terrains relativement meubles soit une pointe 13 pour les terrains durs.

Bien que sur le dessin deux pommeaux 12 et deux pointes 13 aient été représentés à des fins d'illustration, il va de soi que les bras 2, 3, 4, 5 seront munis à leurs extrémintés de quatre embouts de même type.

Avantageusement et selon une caractéristique de l'invention, les bras 2, 3, 4, 5 peuvent être constitués de plusieurs segments tubulaires coulissants ou emboîtables l'un dans l'autre, qui permettent d'adapter la longueur L desdits bras à la mesure de référence M souhaitée.

L'appareil 1 conforme à la présente invention possède un vaste domaine d'applications car il peut être utilisé aussi bien pour jalonner que pour arpenter un terrain.

On comprendra que l'exemple de réalisation ci-dessus décrit et représenté ne l'a été qu'en vue d'une divulgation plutôt que d'une limitation et que, sans sortir du cadre de l'invention, de nombreuses modifications, combinaisons et substitutions peuvent être effectuées par un homme de l'art en se basant sur les enseignements ci-dessus donnés.

REVENDICATIONS

1. Appareil de mesure d'une distance entre deux points, destiné plus particulièrement à jalonner un terrain, CARACTERISE PAR LE FAIT QU'il est constitué :

- d'une part, d'un organe de mesure formé de n bras régulièrement disposés en étoile autour d'un moyeu central rotatif et dont les extrémités libres, destinées à prendre appui sur le sol, définissent entre elles des unités égales d'une mesure de référence en corrélation avec le nombre et la longueur desdits bras,

- et d'autre part, d'un organe de préhension manuelle servant de support au susdit moyeu rotatif.

2. Appareil selon la revendication 1, CARACTERISE PAR LE FAIT QUE n est un nombre entier supérieur ou égal à 3.

3. Appareil selon la revendication 1, CARACTERISE PAR LE FAIT QUE le susdit organe de préhension manuelle est constitué d'un manchon tubulaire servant de coussinet à un arbre dont une extrémité est solidaire du susdit moyeu central.

4. Appareil selon la revendication 1, CARACTERISE PAR LE FAIT QUE les susdits bras de l'organe de mesure sont réglables en longueur.

5. Appareil selon la revendication 1, CARACTERISE PAR LE FAIT QUE l'extrémité libre de chaque bras comporte un embout amovible portant une pointe.

6. Appareil selon la revendication 1, CARACTERISE PAR LE FAIT QUE l'extrémité libre de chaque bras comporte un embout amovible portant un pommeau.

7. Appareil selon les revendications 1 et 2, CARACTERISE PAR LE FAIT QUE le susdit organe de mesure comprend quatre bras associés deux à deux au moyen de deux demi-moyeux calés l'un par rapport à l'autre et munis chacun de deux bras disposés dans le prolongement l'un de l'autre.

8. Appareil selon les revendications 1 et 3, CARACTERISE PAR LE FAIT QUE le susdit arbre est constitué d'un dispositif boulon-écrou dont la tige traverse axialement le susdit manchon et le susdit moyeu séparés par un contre-écrou de serrage.

9. Appareil selon les revendications 1, 3, 7 et 8 prises ensemble, CARACTERISE PAR LE FAIT QUE les deux demi-moyeux de l'organe de mesure sont constitués de deux platines plaquées l'une contre l'autre par le dispositif boulon-écrou et calées l'une par rapport à l'autre par assemblage d'un tenon et d'au-moins une mortaise dessinés sur les deux faces des platines destinées à être en contact.

10. Appareil selon la revendication 9, CARACTERISE PAR LE FAIT QUE la face d'un demi-moyeu comporte deux mortaises destinées l'une à une disposition des bras en étoile et l'autre à une disposition des bras en deux axes
parallèles.

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | <u>DE - A - 2 528 969</u> (A. KLEIN) <br><br> * page 2, alinéa 3 - page 3, alinéa 1; page 4, alinéa 3; figures 1,11 * <br><br> -- | 1,4 | G 01 C 15/00 |
| A | <u>FR - A - 1 506 904</u> (G.T. BLAKE) <br><br> * page 1, colonne de gauche, alinéa 4 - colonne de droite, alinéa 1; figures 1,2 * <br><br> -- | 1,5 | |
| A | <u>US - A - 1 401 200</u> (A.R. SMITH) <br><br> * page 1, lignes 62-89; figure 1 * <br><br> -- | | |
| A | <u>CH - A - 327 775</u> (E. RIBI) <br><br> * page 1, lignes 9-19; figure 2 * <br><br> -- | | |
| A | <u>DE - C - 7 388</u> (P. KRAUS) <br><br> * revendication; figure 2 * <br><br> ---------- | | |

**DOMAINES TECHNIQUES RECHERCHES (Int. Cl. ³)**

G 01 C   3/00
          15/00
          22/00
G 01 B   3/00
          5/00
          21/00

Le présent rapport de recherche a été établi pour toutes les revendications

| Lieu de la recherche | Date d'achèvement de la recherche | Examinateur |
|---|---|---|
| La Haye | 16-06-1982 | PRATSCH |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82